# FASCICULE DE BREVET EUROPEEN

(11) **EP 1 389 653 B1**
(45) Date de publication et mention de la délivrance du brevet: **02.05.2007**
(21) Numéro de dépôt: 03362014.7
(22) Date de dépôt: 13.08.2003
(51) Int. Cl.: E02B 7/20, E02C 1/00

(54) **Dispositif de manoeuvre de mécanismes associés aux écluses et de régulation de flux de rivières**
Bedienungsvorrichtung für Mechanismen, die mit Schleusen verbunden sind und für Durchflussregulierung von Flüssen
Operation device for mechanisms associated to locks and for flow control of rivers

(30) Priorité: 13.08.2002 FR 0210263
(43) Date de publication de la demande: 18.02.2004
(73) Titulaire: Rouby Industrie, 16100 Chateaubernard (FR)
(72) Inventeur: Nomballais, Jean-Jacques, 16100 Cognac (FR)
(74) Mandataire: Fantin, Laurent

(56) Documents cités:
- WO-A-98/40630
- FR-A- 2 803 312
- US-B1- 6 290 474

## Description

La présente invention concerne un dispositif de manoeuvre de mécanismes associés aux écluses tels que vantaux et vantelles d'écluses ainsi qu'aux vannes et clapets des seuils de niveaux grâce à des vérins.

L'invention couvre aussi l'installation hydraulique et électrique équipée de ces dispositifs.

On sait que les rivières et canaux, pour être rendus navigables sont régulièrement coupés par des écluses qui permettent de franchir des dénivelés importantes, à la descente comme à la montée, en gardant néanmoins un débit de la rivière compatible avec les embarcations qui y naviguent.

Ces écluses utilisent la gravité et le principe des vases communicants pour remplir des bassins fermés aux deux extrémités par des portes comprenant chacune un ou deux vantaux. Des moyens de mise en communication de l'eau du bief amont vers le bassin pour le remplir ou du bassin vers le bief aval pour le vider, sont prévus.

Pour la plupart des écluses dites à sas, ces moyens de mise en communication comprennent au moins une vantelle, c'est-à-dire une petite porte montée coulissante comme une guillotine, disposée en bas de l'un au moins des vantaux.

Certaines de ces écluses sont surveillées et pilotées par des éclusiers qui travaillent et habitent sur place dans des maisons éclusières.

Afin de diminuer les contraintes de personnel et de faciliter l'exploitation, nombre de ces écluses ont été mécanisées ou sont en voie de l'être. Il est même déjà installé des systèmes de gestion de plusieurs écluses par un même éclusier.

Ces systèmes sont télésurveillés et télécontrôlés par un même éclusier qui ne se déplace qu'en cas de problème.

Certaines écluses sont mêmes entièrement automatisées et l'utilisateur déclenche lui même les cycles de passage à l'aide d'un déclencheur tel qu'un badge ou une carte magnétique.

Ce type de fonctionnement est limité essentiellement à de petites écluses et à des circulations d'usagers de la plaisance.

Il existe aussi d'autres mécanismes de régulation du flux des rivières ou fleuves grâce à des seuils de niveaux sous forme de vannes wagons, de vannes secteurs ou de clapets qui provoquent des retenues d'eau en amont par la manoeuvre de portes également, mais verticalement, en rotation ou en inclinaison.

Il est à noter que ces écluses et les mécanismes associés doivent fonctionner de façon fiable, sous les conditions climatiques du moment. Dans le cas d'inondations, l'ensemble peut même se trouver submergé pendant quelques temps. Dans ce cas, il convient de protéger ou d'évacuer les équipements susceptibles d'être détériorés par ces crues, notamment les commandes et les matériels électriques.

Il existe un très grand nombre de cours d'eau et de nombreuses voies navigables et les ouvrages sont souvent anciens du point de vue génie civil et sont remarquables, architecturalement parlant.

Un grand nombre de ces ouvrages est classé dans le cadre du patrimoine, induisant des contraintes limitatives importantes lorsque des modifications s'imposent.

Quand ils ne sont pas classés, l'esthétique des écluses ou des seuils constitue un facteur important lors de réalisations nouvelles ou lors de leur restauration.

Le cadre de ces ouvrages est généralement beau et rend nécessaire d'harmoniser l'installation technique avec l'environnement afin que cette installation ne dépareille pas.

Il faut donc assurer les fonctions techniques dans les meilleures conditions d'exploitation sans perturber l'environnement.

Les meilleures conditions d'exploitation impliquent une grande fiabilité, un entretien des plus limités tant en fréquence d'interventions qu'en durée et en matériels nécessaires, un rendement performant pour limiter les coûts de fonctionnement et enfin, en cas de panne, l'apport d'une solution efficace en attendant la réparation.

Pour la suite de la description, à titre d'exemple, on s'attache à une écluse type sas, comprenant deux vantaux avec chacun une vantelle, les mécanismes de manoeuvre des éléments mobiles étant nécessairement des vérins. Afin de disposer de la meilleure compacité pour développer néanmoins de fortes poussées, de la sécurité nécessaire et d'un rendement adapté, ce sont des vérins hydrauliques qui sont utilisés. Ces vérins sont de plus en plus substitués aux systèmes mécaniques à pignons tels que mis en place sur les ouvrages les plus anciens. Ces systèmes à fonctionnement manuel sont en effet fatigants à manoeuvrer lorsque cela se répète de très nombreuses fois par jour et ils restent de toutes les façons très lents.

Dans le cas des systèmes équipés de vérins hydrauliques, chaque vantail de porte est ainsi manoeuvré par un vérin interposé entre le génie civil, plus particulièrement un des bajoyers du bassin et chaque vantail.

Chaque vantelle est également manoeuvrée par un vérin hydraulique, solidaire du vantail, installé verticalement, en sorte faire coulisser la vantelle telle une guillotine dans des glissières prévues à cet effet sur le vantail.

Il existe ensuite plusieurs agencements possibles pour une installation permettant l'alimentation de ces vérins, le contrôle-commande et la sécurité du fonctionnement grâce à différents capteurs.

Un solution consiste à prévoir un local de commande centralisé construit à l'écart des portes, qui inclue la centrale hydraulique, les distributeurs, le pupitre de commande et le tableau de sécurité recevant l'ensemble des signaux des capteurs.

Cette solution présente des inconvénients. Tout d'abord, lorsque la centrale hydraulique est en panne, l'ensemble est immobilisé et il est difficile de dépanner par des moyens manuels sachant qu'il faut dans ce cas fournir toujours la forte pression mais aussi un débit important pour alimenter l'ensemble des vérins.

De plus, le coût d'une telle installation est important car il faut prévoir un ensemble de caniveaux, de gaines et de tuyauteries à mettre en place. Ces conduites doivent être encastrées pour des raisons de sécurité et d'esthétique. Il faut aussi assurer l'alimentation de l'autre berge, ce qui oblige à une traversée en fond de bassin.

Enfin cette solution impose la construction du local.

Afin de supprimer un certain nombre de ces inconvénients, il a été imaginé de disposer à proximité de chaque vantail un poste indépendant alimentant chacun les vérins d'un vantail et de la vantelle associée.

Ceci supprime les conduites, il suffit de prévoir un réseau électrique. Les capteurs et les sécurités associées sont intégrés dans chacun des postes. Il est alors possible de prévoir un dépannage manuel en cas de panne de l'un des postes. L'intervention n'immobilise pas les autres postes et ne nécessite pas un redémarrage de l'ensemble. Il suffit de remettre en service et de vérifier la sécurité du seul poste concerné.

Ces postes indépendants donnent toute satisfaction en de nombreux lieux mais l'inconvénient majeur réside dans leur caractère inesthétique incompatible avec certains ouvrages classés au patrimoine. En effet, il s'agit de bornes en saillie au-dessus du génie civil à proximité immédiate de la porte puisque c'est là leur principal intérêt.

De plus, ils sont nécessairement encombrants puisqu'ils intègrent la centrale hydraulique, la bâche de fluide hydraulique et les organes de contrôle commande électriques.

Ces coffrets ne peuvent être intégrés dans le sol pour une première raison qui tient au fait que les interventions sur certains ouvrages sont interdites ou limitées au point de ne pas permettre la réalisation d'une excavation suffisante et pour une seconde raison liée au fait que ces coffrets ne sont pas étanches, tout au plus au ruissellement.

Une solution récente consiste à disposer en lieu et place de telles postes autonomes des autovérins. Ces autovérins sont des vérins qui comprennent dans le corps de vérin, la motorisation et la réserve d'huile permettant le fonctionnement du piston.

Il n'y a plus de problèmes de distribution et l'inversion du sens de fonctionnement du vérin double effet est obtenue par rotation en sens inverse du moteur par inversion des polarités.

Les flexibles et autres conduits rigides sont définitivement supprimés puisque tout est intégré.

Par contre, les capteurs de sécurité ne sont pas associés à ces autovérins et seuls des limiteurs de puissance sont intégrés.

Un autre inconvénient résulte de la grande longueur de ces ensembles lorsque les moteurs et réserves sont en tête et que les vérins ont de grandes courses. Dans ce cas, compte tenu du pivotement lors du déplacement de la porte, cela engendre des problèmes d'intégration dans le génie civil. Il faut de façon préférentielle un montage sur cardan et le déplacement angulaire conduit à la réalisation d'une fosse de dimensions importantes, contraintes qui rendent moins attractif le recours à des autovérins. Le résultat est généralement peu esthétique, surtout pour les vérins placés en aérien, comme dans le cas de la manoeuvre de porte de seuil. Compte tenu de la grande longueur, ils se prolongent très nettement au-dessus des ouvrages.

Il faut aussi constater que lors d'une restauration, les vérins existants ne peuvent être réutilisés et il faut changer l'ensemble du parc alors que leur longévité est importante.

En cas de panne, l'autovérin doit être démonté et envoyé en usine pour être réparé ou entretenu. Cela nécessite de conserver sur place ou d'apporter un autovérin de rechange, du même type, complet, pour remplacer l'autovérin démonté. Cela constitue une opération lourde

Ensuite, on constate nécessairement qu'il faut autant d'autovérins qu'il y a de mécanismes à manoeuvrer. Dans le cas d'une écluse comportant quatre vantaux avec deux vantelles par vantail, on arrive rapidement à 12 autovérins, la solution est donc coûteuse.

Enfin, en cas de panne le dépannage manuel n'est pas performant. En effet, deux solutions de secours existent :
- un levier à fonctionnement alternatif associé à l'autovérin permet sa manoeuvre. L'inversion du sens de manoeuvre est obtenu par un petit levier inverseur rapporté.
- une sortie d'arbre coté ventilateur du moteur électrique, qui permet à l'opérateur d'entraîner le moteur en rotation. Cependant la vitesse de rotation obtenu est nécessairement très inférieure à celle du moteur (50 tours/min contre 750 tours/min).

Cet art antérieur est parfaitement illustré dans la demande de brevet français N° 2 803 312.

Toutes ces contraintes ont conduit à la mise au point d'un dispositif de manoeuvre de mécanismes selon l'invention, tel que défini par la revendication 1 annexée qui pallie les inconvénients des solutions antérieures, qui est compatible avec les installations nouvelles comme avec la restauration ou la modernisation des ouvrages anciens, qui est fiable et qui peut fonctionner dans tous les cas, y compris en état d'immersion totale et qui peut être dépanné de façon simple avec un rendement tout à fait acceptable.

Le dispositif selon la présente invention est décrit en détail, de façon simplifiée, à travers des schémas fonctionnels, en sorte d'en faire ressortir toutes les spécificités et les avantages qui en découlent.

L'invention a aussi pour objet une installation hydraulique telle que définie par la revendication 10 annexée.

Les différents dessins annexés montrent ce mode de réalisation et les figures représentent:
- figure 1, une vue en perspective d'une écluse à sas équipée de dispositifs selon la présente invention, et
- figure 2, une vue en perspective éclatée avec arrachement partiel d'un dispositif isolé.

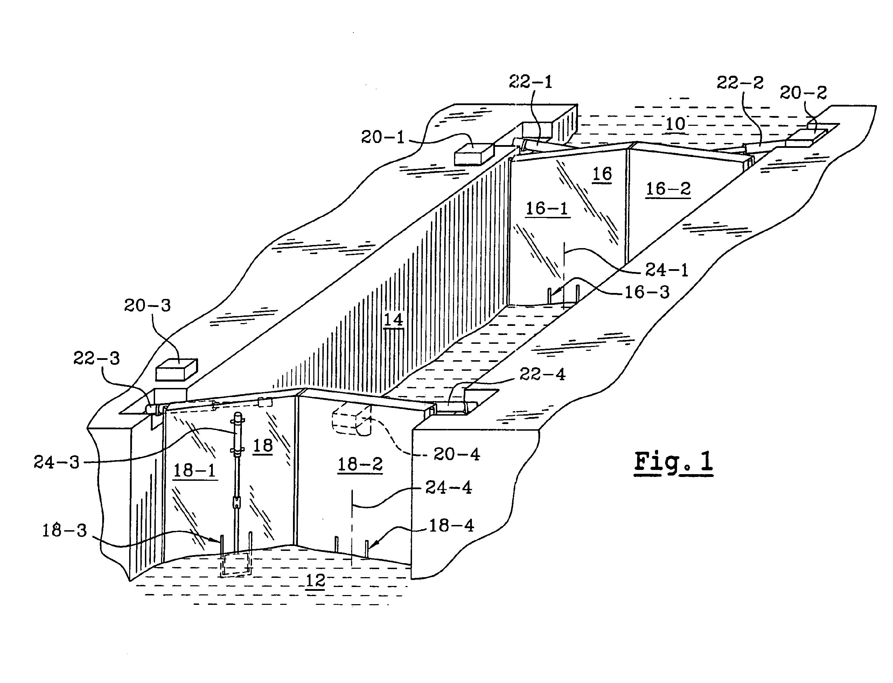

Sur la figure 1, on a représenté une écluse à sas avec un bief amont 10, un bief aval 12, un bassin 14, une porte amont 16 et une porte aval 18.

Les deux portes comprennent chacune deux vantaux 16-1 et 16-2, 18-1 et 18-2.

Sur chaque vantail est prévue une vantelle 16-3 et 16-4, 18-3 et 18-4.

L'invention prévoit un caisson 20 compact et complet pour chacun des vantaux d'une porte, soit en l'occurrence quatre caissons 20-1 à 20-4.

Ces caissons sont disposés en différents endroits pour montrer l'éventail des possibilités. bans tous les cas, les caissons sont indépendants mécaniquement des vérins et n'en font pas partie intégrante comme cela est le cas dans les autovérins.

Ils peuvent reposer au sol à proximité immédiate du vantail, 20-1, 20-3 ou être intégrés 20-2 dans un logement ménagé dans le génie civil lorsque cela est possible, immédiatement au-dessus du vérin de vantail ou encore rapporté sur la porte, soit au-dessus, dans les superstructures de passerelle non représentées pour la clarté du dessin, soit sur une face 20-4.

Ceci élargit grandement les possibilités de positionnement.

Dans le cas retenu pour l'exemple, il est prévu un vérin double effet pour chacun des éléments mobiles soit au total quatre vérins 22-1 à 22-4, un pour chacun des vantaux et quatre vérins 24-1 à 24-4, un pour chacune des vantelles.

Ces vérins sont adaptés à la fonction, ce qui détermine la puissance, l'encombrement et d'autres paramètres bien connus des bureaux d'études.

Les vérins concernés peuvent être soit des vérins neufs dans le cas d'une nouvelle installation ou d'une réfection totale, soit les vérins qui sont en place dans le cas d'une restauration.

Chaque couple de vérins 22-1, 24-1 de chaque vantail et de la vantelle associée, est relié par des conduits 26 souples ou rigides au caisson associé. Ces conduits sont de préférence souples tels que des flexibles armés, de courte longueur puisque le caisson est logé à proximité immédiate des vérins. Les pertes de charge sont alors négligeables.

Les flexibles actuellement disponibles sur le marché sont d'un prix tout à fait acceptable et présentent une durée de vie de une à deux dizaines d'années, ce qui est là encore du même ordre de grandeur que la fréquence de changements des joints des vérins ou d'autres pièces.

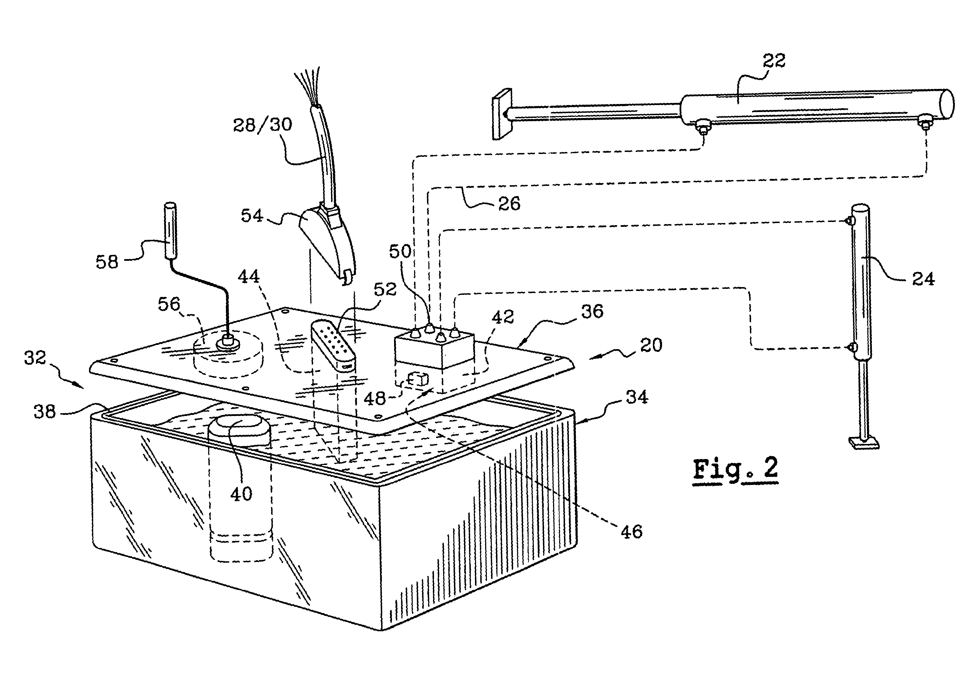

Chaque caisson 20 est alimenté par un câble électrique 28 et par un câble de données 30, visibles sur la figure 2. Ces câbles peuvent être disposés dans un gainage unique.

Ces câbles sont reliés directement à un poste central d'alimentation, de commande et/ou de surveillance.

Sur cette figure 2, on a représenté le caisson en détail qui comprend une enceinte 32 avec une base 34 et un couvercle 36 monté de façon amovible et étanche sur cette base au moyen d'un joint d'étanchéité 38. Ce joint peut être de type torique disposé dans une gorge, ceci de façon connue.

Cette base du caisson 20 est équipée d'une pompe hydraulique 40 à motorisation électrique, d'un bloc foré hydraulique 42, d'une centrale de pilotage et d'alimentation 44 avec les liaisons avec des capteurs 46 de sécurité tels que le capteur 48 interne de niveau de fluide hydraulique.

Le bloc foré hydraulique 42 est accessible de l'extérieur et possède des connexions hydrauliques rapides 50 telles que celles connues dans le commerce sous la dénomination "coupleurs rapides hydrauliques", prêtes à recevoir les flexibles 26 des vérins.

De même la centrale de pilotage 44 est accessible de l'extérieur au moyen d'au moins une prise 52 à connexion étanche, dite IP68 suivant les normes, prête à recevoir au moins une prise 54 conjuguée à verrouillage étanche, également IP68. Le groupe motopompe est équipé d'un moteur immergé dans l'huile hydraulique. Le double effet des vérins est obtenu par inversion du sens de rotation du moteur électrique de la pompe.

Il est aussi possible en variante, de placer deux groupes motopompe, indépendants, identiques, alimentant chacun un vérin.

L'ensemble de ces éléments, pompe hydraulique 40, bloc foré hydraulique 42, centrale de pilotage et d'alimentation 44 et certains des capteurs 46 de sécurité tel que le capteur 48 de niveau de fluide hydraulique sont à baigner dans l'huile.

Ainsi, on dispose d'un caisson 20 étanche, intégré et autonome, répondant aux conditions de la norme IP68.

Pour la mise en service, il suffit de connecter les conduits 26 des vérins c'est-à-dire celui du vérin du vantail mais aussi du vérin de la vantelle associée sur le bloc foré hydraulique 42 grâce aux connexions rapides hydrauliques et de connecter la prise 54 sur la prise 52 pour disposer d'un ensemble fonctionnel.

On note que le caisson peut être placé en tout lieu, à proximité des deux vérins.

Du fait de son étanchéité et de la position immergée des composants, le caisson peut être indifféremment placé en position verticale ou horizontale, suivant les contraintes du lieu.

Pour la mise en service, une fois le câblage nécessaire en place comme dans toutes les autres installations, la mise en service ne nécessite aucune compétence spécifique puisqu'il suffit de réaliser des connexions.

Ceci permet aussi de réaliser des dépannages très rapidement puisqu'il suffit de changer de caisson par déconnexion et reconnexion d'un nouveau caisson.

Ces caissons peuvent être soit paramétrés en usine pour les différentes courses soit paramétrés sur site en fonction des besoins ou par apprentissage, grâce à l'accès aux composants du bloc foré hydraulique 42 de l'extérieur du caisson 20.

Le caisson présente aussi l'avantage de la discrétion car il est de faibles dimensions, notamment en hauteur et surtout, il peut être placé au mieux des règles esthétiques et de la configuration du lieu.

Le caisson étant étanche suivant la norme IP68, il peut être immergé si le niveau d'eau augmente lors d'une crue par exemple, et peut fonctionner sans problème ultérieurement, sans maintenance spécifique et sans prévoir une quelconque protection préalable.

On a constaté aussi que l'échauffement dû au fonctionnement provoque une légère mise en surpression du caisson, ce qui augmente les capacités d'étanchéité hydraulique du joint. De la même façon, selon un perfectionnement de l'invention, le caisson est empli de fluide hydraulique à proximité du minimum et le ou les vérins associés sont en position d'extension, la chambre étant complété en fluide hydraulique, avant raccordement. Ainsi, lorsque le fluide du ou des vérins revient à la bâche, il y augmentation de volume et donc de pression dans ledit caisson, ce qui favorise le travail du joint surtout quand il est de type torique.

Si le nombre de vérins augmente lors de la présence de deux vantelles par vantail par exemple, il suffit de connecter le second vérin de vantelle sans pour cela requérir une modification substantielle de l'installation.

Dans le cas d'une restauration notamment, les vérins utilisés sont également les vérins en place, ce qui ne demande aucun démontage/remontage des vérins et surtout ne requiert aucune modification de l'implantation donc aucune modification des portes ou du génie civil. Ceci permet une économie certaine.

L'apport des caissons selon la présente invention est important par rapport aux autovérins dans lesquels tout est intégré et pour lesquels il est nécessaire d'entreprendre le démontage complet.

Le dispositif selon l'invention permet aussi le respect des normes en vigueur concernant les capteurs et les détecteurs de défaut de fonctionnement. En effet, ces capteurs et détecteurs sont particulièrement utiles pour contrôler les conditions de fonctionnement de l'installation car il est possible à l'éclusier ou à l'opérateur en charge de la surveillance de déterminer le type de panne et d'agir en conséquence.

Ainsi, dans le cas d'un obstacle qui interdit la fermeture d'une vantelle, il est possible de contrôler à distance l'effort de manoeuvre par les capteurs 46 de sécurité et de déterminer le type de problème et sur quel organe.

En cas de fuite sur un vérin suite à une détérioration par exemple à cause d'un choc d'une structure navigante contre un des vantaux, le capteur 48 de niveau de fluide hydraulique détecte un niveau insuffisant d'huile et interdit le fonctionnement, évitant ainsi toute détérioration des composants hydrauliques.

En cas d'un choc violent d'une structure navigante contre un des vantaux, le bloc foré hydraulique 42 permet la dissipation de l'énergie transmise au vérin dans la limite des réglages effectués en usine.

Il subsiste encore un problème soulevé par les agencements antérieurs, celui du dépannage en cas de coupure de courant par exemple.

Comment manoeuvrer les portes malgré un manque d'alimentation électrique ?

Dans le dispositif selon l'invention, ce problème est solutionné de façon aisée car il existe sur le marché des pompes rotatives telle que 56, à entraînement manuel par une manivelle 58, ayant un très bon rendement. De plus, de telles pompes ne nécessitent aucun inverseur puisqu'il suffit de tourner la manivelle dans le sens contraire pour obtenir une circulation du fluide hydraulique dans le sens opposé.

Une telle pompe est alors installée également noyée dans le caisson, seule la manivelle 58 étant accessible de l'extérieur.

De ce fait, les moyens de secours sont autonomes. Avantageusement, cette pompe est reliée à un bloc foré hydraulique, permettant la mise en service et l'isolement du groupe motopompe électrique.

Dans un tel agencement, l'utilisation de ces moyens de secours ne fait courir aucun danger aux utilisateurs du fait de l'indépendance des circuits hydrauliques électrique et manuel.

Dans le cas de l'art antérieur, si la manivelle est reliée directement à l'arbre moteur, non seulement comme cela a été indiqué ci-avant, le rendement est très mauvais mais en cas de réalimentation en courant, l'utilisateur risque de subir un retour de manivelle s'il n'est pas prévenu ou s'il ne désolidarise pas la manivelle rapidement.

On peut également constater que dans le caisson, la pompe hydraulique n'a pas besoin d'être spécifique et peut être choisie parmi les pompes existantes sur le marché. En effet, il existe des pompes compactes. L'intérieur du caisson peut être agencé comme il convient en fonction des pompes du marché et non l'inverse.

Par contre, dans le cas des autovérins, compte tenu de l'environnement très spécifique, il faut développer des pompes également spécifiques dont le coût est très élevé.

L'agencement d'un caisson autonome est donc particulièrement avantageux tant sur les plans techniques que financiers ou esthétiques, critères qui font partie intégrante des cahiers des charges des appels d'offres généralement soumis dans ce domaine.

L'invention couvre aussi l'installation hydraulique équipée de ces dispositifs, qu'il s'agisse d'une écluse ou d'un seuil de niveau équipé d'une porte à hauteur réglable.

Ainsi, cette installation hydraulique alimente au moins un vérin hydraulique de manoeuvre d'un mécanisme.

Dans le cas des seuils de niveau, le caractère esthétique obtenu grâce à l'agencement technique selon l'invention est remarquable car les vérins sont d'une hauteur réduite et le caisson qui les pilote et les alimente, est intégré dans la structure métallique supportant le vérin ou dans les maçonneries.

## Revendications

1. Dispositif de manoeuvre de mécanismes associés à des écluses, tels que des vantaux et vantelles d'écluses et/ou des seuils de niveaux, grâce à des vérins hydrauliques (22,24), double effet, alimentés par des conduits (26), souples ou rigides, **caractérisé en ce qu**' il comprend un caisson (20) indépendant mécaniquement du vérin ou des vérins, contenant au moins une pompe hydraulique (40) à motorisation électrique, un bloc foré hydraulique (42) de distribution et une centrale de pilotage et d'alimentation (44), du fluide hydraulique étant contenu dans ledit caisson, la pompe avec sa motorisation électrique, le bloc foré hydraulique et la centrale étant immergés dans ce fluide hydraulique.

2. Dispositif de manoeuvre de mécanismes selon la revendication 1, **caractérisé en ce que** le caisson (20) comprend des moyens (38) d'étanchéité.

3. Dispositif de manoeuvre de mécanismes selon la revendication 2, **caractérisé en ce que** le caisson (20) comprend une enceinte (32) avec une base (34) et un couvercle (36) monté de façon amovible et étanche sur cette base au moyen d'un joint d'étanchéité (38).

4. Dispositif de manoeuvre de mécanismes selon l'une quelconque des revendications précédentes, **caractérisé en ce que** le bloc foré hydraulique (42) comprend des connexions rapides hydrauliques (50), accessibles de l'extérieur du caisson.

5. Dispositif de manoeuvre de mécanismes selon l'une quelconque des revendications précédentes, **caractérisé en ce que** la centrale de pilotage et d'alimentation (44) comprend au moins une prise étanche (52) accessible de l'extérieur du caisson et susceptible de recevoir au moins une prise (54) étanche de profil conjugué.

6. Dispositif de manoeuvre de mécanismes selon l'une quelconque des revendications précédentes, **caractérisé en ce qu**'il comprend des liaisons avec des capteurs (46) de sécurité.

7. Dispositif de manoeuvre de mécanismes selon la revendication 6, **caractérisé en ce que** les capteurs de sécurité comprennent au moins un capteur (48) interne de niveau de fluide hydraulique et/ou au moins un capteur externe au caisson (20).

8. Dispositif de manoeuvre de mécanismes selon l'une quelconque des revendications précédentes, **caractérisé en ce qu**'il comprend une pompe rotative (56) à entraînement manuel par une manivelle (58), indépendante.

9. Dispositif de manoeuvre de mécanismes selon l'une quelconque des revendications précédentes, **caractérisé en ce qu**'il comprend plusieurs pompes hydrauliques (40), disposées dans un même caisson.

10. Installation hydraulique équipée d'au moins un dispositif selon l'une quelconque des revendications précédentes alimentant au moins un vérin hydraulique de manoeuvre d'un mécanisme.

## Claims

1. Device for manoeuvring mechanisms associated with locks, such as lock gates and leaves and/or level thresholds, by virtue of double-acting hydraulic jacks (22, 24) supplied by flexible or rigid pipes (26), **characterised in that** it comprises a tank (20) mechanically independent of the jack or jacks, containing at least one electrically driven hydraulic pump (40), a drilled hydraulic distribution block (42) and a control and supply unit (44), hydraulic fluid being contained in said tank, the pump with its electric drive, the drilled hydraulic block and the unit being immersed in this hydraulic fluid.

2. Device for manoeuvring mechanisms according to claim 1, **characterised in that** the tank (20) comprises sealing means (38).

3. Device for manoeuvring mechanisms according to claim 2, **characterised in that** the tank (20) comprises a chamber (32) with a base (34) and a cover (36) mounted removably and sealingly on this base by means of a gasket (38).

4. Device for manoeuvring mechanisms according to any one of the preceding claims, **characterised in that** the drilled hydraulic block (42) comprises quick hydraulic connections (50) accessible from outside the tank.

5. Device for manoeuvring mechanisms according to any one of the preceding claims, **characterised in that** the control and supply unit (44) comprises at least one fluidtight socket (52) accessible from outside the tank and able to receive at least one fluidtight plug (54) of conjugate profile.

6. Device for manoeuvring mechanisms according to any one of the preceding claims, **characterised in that** it comprises connections with safety sensors (46).

7. Device for manoeuvring mechanisms according to claim 6, **characterised in that** the safety sensors comprise at least one internal hydraulic fluid-level sensor (48) and/or at least one sensor external to the tank (20).

8. Device for manoeuvring mechanisms according to any one of the preceding claims, **characterised in that** it comprises an independent rotary pump (56) with a manual driving crank (58).

9. Device for manoeuvring mechanisms according to any one of the preceding claims, **characterised in that** it comprises several hydraulic pumps (40) disposed in the same tank.

10. Hydraulic installation equipped with at least one device according to any one of the preceding claims, supplying at least one hydraulic jack for manoeuvring a mechanism.

## Patentansprüche

1. Vorrichtung zur Betätigung von Schleusen zugeordneten Mechanismen, wie Schleusenflügeln und -schiebern und/oder Stufenschwellen, anhand von hydraulischen Zylindern (22, 24) mit doppelter Wirkung, die durch flexible oder starre Leitungen (26) gespeist werden, **dadurch gekennzeichnet, dass** sie einen von dem bzw. den Zylindern mechanisch unabhängigen Kasten (20) umfasst, der mindestens eine mit einem Elektromotor betriebene Hydraulikpumpe (40), einen mit Bohrungen versehenen hydraulischen Verteilungsblock (42) und eine Anlage zur Steuerung und Versorgung (44) für das in dem Kasten enthaltene hydraulische Medium enthält, wobei die Pumpe mit ihrem Elektromotor, der mit Bohrungen versehene hydraulische Block und die Anlage in diesem hydraulischen Medium eingetaucht sind.

2. Vorrichtung zur Betätigung von Mechanismen nach Anspruch 1, **dadurch gekennzeichnet, dass** der Kasten (20) Dichtmittel (38) umfasst.

3. Vorrichtung zur Betätigung von Mechanismen nach Anspruch 2, **dadurch gekennzeichnet, dass** der Kasten (20) einen Raum (32) mit einem Körper (34) und einem Deckel (36) umfasst, wobei dieser Deckel beweglich und mittels einer Dichtung (38) dicht an diesem Körper angebracht ist.

4. Vorrichtung zur Betätigung von Mechanismen nach einem der vorstehenden Ansprüche, **dadurch gekennzeichnet, dass** der mit Bohrungen versehene hydraulische Block (42) hydraulische Schnellanschlüsse (50) umfasst, die von außerhalb des Kastens zugänglich sind.

5. Vorrichtung zur Betätigung von Mechanismen nach einem der vorstehenden Ansprüche, **dadurch gekennzeichnet, dass** die Steuerungs- und Versorgungsanlage (44) mindestens eine von außerhalb des Kastens zugängliche dichte Steckleiste (52) zur Aufnahme mindestens eines mit einem Gegenprofil versehenen dichten Steckers (54) umfasst.

6. Vorrichtung zur Betätigung von Mechanismen nach einem der vorstehenden Ansprüche, **dadurch gekennzeichnet, dass** sie Verbindungen mit Sicherheitssensoren (46) umfasst.

7. Vorrichtung zur Betätigung von Mechanismen nach Anspruch 6, **dadurch gekennzeichnet, dass** die Sicherheitssensoren mindestens einen inneren Sensor (48) zur Erfassung des Pegels des hydraulischen Mediums und/oder mindestens einen außerhalb des Kastens (20) angeordneten Sensor umfassen.

8. Vorrichtung zur Betätigung von Mechanismen nach einem der vorstehenden Ansprüche, **dadurch gekennzeichnet, dass** sie eine unabhängige Rotationspumpe (56) umfasst, die per Hand mit einer Kurbel (58) angetrieben wird.

9. Vorrichtung zur Betätigung von Mechanismen nach einem der vorstehenden Ansprüche, **dadurch gekennzeichnet, dass** sie mehrere in einem selben Kasten angeordnete Hydraulikpumpen (40) umfasst.

10. Hydraulikanlage, ausgestattet mit mindestens einer Vorrichtung nach einem der vorstehenden Ansprüche, zur Versorgung mindestens eines hydraulischen Zylinders zur Betätigung eines Mechanismus.
